# EUROPEAN PATENT APPLICATION

(11) **EP 3 042 560 A1**
(43) Date of publication of application: **13.07.2016**
(21) Application number: 15150229.1
(22) Date of filing: 06.01.2015
(51) Int. Cl.: A01K 61/00

(54) **Process for the preparation of mussel spats (Bivalves)**

(71) Applicant: Naissains, Thau, 34340 Marseillan (FR); Vendee Naissains, 85230 Bonin (FR)
(72) Inventor: Dessrousseaux, Nicolas, 34340 Marseillan (FR)
(74) Representative: Fabry, Bernd

(57) **Abstract**

Suggested is a process for the preparation of mussel spat, in that the shells of dead young individuals are separated from the living spat by air-separation.

## Description

### FIELD OF INVENTION

The present invention belongs to the area aquaculture and refers to a process for removing the shells of dead mussels from a vital spat population, in particular an oyster spat.

### STATE OF THE ART

Through its potential for rapid growth and its wide ranging tolerance to environmental conditions, the Pacific cupped oyster has become the oyster of choice for cultivation in many regions of the world. While its origins are in Japan, where it has been cultivated for centuries, it has been the subject of widespread introductions elsewhere, most significantly to the western seaboard of the United States of America from the 1920s and to France beginning in 1966. The Pacific oyster has been introduced either to replace stocks of indigenous oysters severely depleted by over-fishing or disease, or to create an industry where none existed before.

The Pacific cupped oyster is an estuarine species, preferring firm bottom substrates where it leads a sedentary existence attached to rocks, debris and shells from the lower intertidal zone to depths of 40 m. However, the oysters can also be found on mud and sand-mud bottoms. Optimal salinity range is between 20 and 25‰ although the species can occur at salinities below 10‰ and will survive salinities in excess of 35 ‰, where it is unlikely to breed. It also has a broad temperature tolerance, with a range of -1.8 to 35 °C. Pacific oysters are protandrous hermaphrodites, most commonly maturing first as males. In areas with good food supply the sex ratio in older oysters shows a predominance of females, whereas the reverse is true in areas of low food supply.

The species is very fecund with 8-15 cm length females producing between 50 and 200 million eggs in a single spawning. Larvae are planktotrophic and are distributed throughout the water column. They measure 70 µm shell length at the prodissoconch I stage - following early embryonic development - and settle out of the water column to crawl, using the larval foot, to seek a suitable settlement location for attachment when 300 to 340 µm. Once settled they metamorphose into the juvenile form. Growth rate is very rapid in good conditions; market size being attained in 18 to 30 months.

Various methodologies are used in the production of Pacific cupped oysters, relating to the source of seed supply, the environmental conditions pertaining in different regions and the type of product marketed, whether oysters for the half-shell trade or for meat extraction.

Where a supply of natural spat is abundant and reliable, oyster growers set out collectors in the wild to secure their own seed supply, independent of hatcheries. Much of the global supply of spat is obtained from wild seed capture, using a wide variety of settlement materials (cultch) hanging in suspension from longlines and rafts.

The use of Triploids allows the production of oysters which can be marketed all over the year, the oyster seed is produced in hatcheries and the treatment in growing is similar to natural species (Nell J. A. (2002). "Farming triploid oysters". Aquaculture 210: 69-88).

Broodstock for hatchery use is usually obtained from a commercial unit's own sea-based grow out facility and is from selected stock maintained in the best possible conditions. Since the sex of adults is not known, groups of adults are obtained at regular intervals from winter through to the natural spawning season. They are held in separate flow-through tanks supplied with cultured algae supplemented seawater at 20-22 °C and salinity within the range 25-32‰. During the winter months, when adults are sexually undeveloped, about six weeks of hatchery conditioning is required to initiate gametogenesis and mature the gametes. A progressively shorter period applies as ambient sea temperature increases towards the spawning season. Adults containing ripe gametes can be spawned by thermal shock treatment but most commonly they are opened and the gametes 'stripped' from the gonads with Pasteur pipettes, a procedure that produces good results.

Hatcheries frequently operate either sea-based or land-based nurseries in which spat are grown from as small as 1 mm length to 25 mm. Densities may be as high as 100 kg/m³ water flow in highly productive areas. This method is adopted to reduce mortality in small spat, which may occur if they are transferred directly to sea-based grow-out.

In contrast to other oysters of importance in commerce, and despite its widespread distribution around the world, few disease problems of major significance have been reported for the Pacific cupped oyster. Of greater concern have been incidences of 'summer mortality' on the Pacific coast of the USA and in France, which appears to be related to post-spawning physiological stress in warm water when oysters are densely crowded.

In order to maintain a vital population and facilitate further processing it is essential to remove the shells of dead individuals from the living spat. Currently this is a hand-made operation, which obviously cost and time-intensive.

Therefore, the object of the present invention has been providing a method and a device which allows separating shells of dead mussel spat from the vital population in an easy and cost saving way.

### DESCRIPTION OF THE INVENTION

A first object of the present invention is related to a process for the preparation of mussel spat, in that the shells of dead young individuals are separated from the living spat by air-separation. In particular said mussel spat is an oyster spat and preferably a spat of the oyster *Crassostrea gigas.*

Surprisingly, it has been observed that air separation represents an efficient, low-cost and mild method to separate shells of dead mussel spat from the living spat.

### AIR SEPARATION PROCESS

Basically, air separation, also called "air classification" or "wind winnowing" is an agricultural method developed by ancient cultures for separating grain from chaff. It is also used to remove weevils or other pests from stored grain. Today, air separation represents a well-known unit operation for mechanical separation wherein particles are separated according to their relation between inert force and flow resistance by means of a gas stream. More particularly, air separation represents a classification process where lighter particles follow the flow, while heavier ones are separated by gravity.

According to the present invention air separation can take place in two alternative embodiments:

In a first alternative the lighter shells are blown from the heavier living mussel spat by compressed air.

In a second alternative the lighter shells are sucked from the heavier mussel spat by a slight vacuum of less than 100 P using a fan.

In order to establish mild process flow rates of 5 to 20 m³/m²*h in the first separation vessel have been found rather advantageous. These values apply for both alternatives (I) and (II). The pressure-air or low-pressure can be provided for example by a fan or blower, (re)moving for example 500 to about 3.000 I air per hour, resulting in linear speed in the second (air) separation vessel of 0.1- 2 m³/m²*h . Preferably the blower or fan provides pressure air or reduced air moving or removing about 0.1 to about 0.5 m³/h*m² air (calculated on the surface of vessel (4).

### SIEVING PROCESS

In a preferred embodiment the spat is subjected to a pre-classification by diameter of the shells. This operation facilitates the later air separation process and provides classes of spat having a similar diameter. For this purpose the mixture of mussel spat and dead shells is subjected to sieving to obtain fractions where the shells of the living mussel spat and the dead shells have a similar size, in particular said classes show an average diameter of for example 6, 10, 15, 20 and 30 mm.

### DEVICE

A second object of the present invention refers to a device for separating shells of dead young individuals from living mussel spats, encompassing the elements
(a) a vessel **(1)** into which the mixture of mussel spat and dead shells is introduced via a feed tube of an diameter adapted to the size of the spat to avoid blocking
(b) a generator or fan **(2)** for supplying a vacuum;
(c) a first container **(3)** for taking up the living mussel spat;
(d) a second vessel **(4)** for separation of air and dead shells
(e) and container **(5)** taking up the dead shells,
wherein
(i) said container or vessel **(1)** is connected with the first **(3)** and the second vessel **(4),** and
(ii) the generator or fan **(2)** is connected with the first container **(3),** to avoid blocking of the fan by parts of shells a sieve is installed between separation container or vessel **(4)** and fan **(2)** to provide a slight vacuum of less than 100 P that sucks the lighter dead shells to separation vessel **(4)** falling then by gravity at a very low air-speed into the second container **(5),** while the heavier living mussel spat is collected in the first container **(3)** by gravity.

To be able to tune the separation a valve **(6)** open to external atmosphere is installed on the top of vessel **(4)** reducing the volumetric flow to provide low-pressure or vacuum that sucks the lighter dead shells into the second vessel **(4)**, while the heavier living mussel spat is collected after separation in vessel **(1)** in the first container **(3)** by gravity.

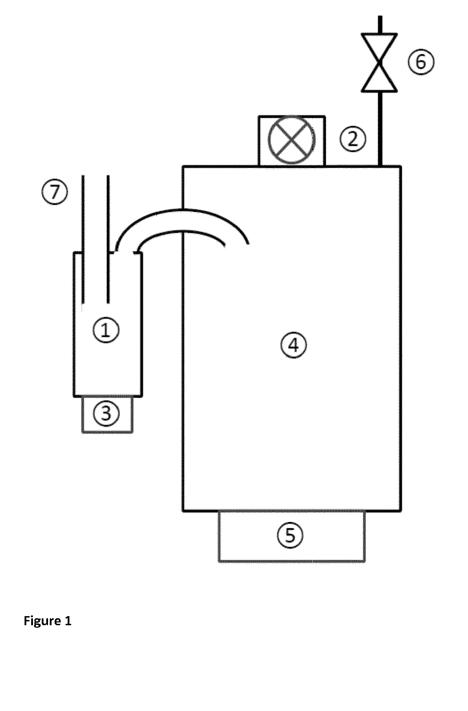

A device according to the present invention is depicted in **Figure 1** and explained in more detail in the following:

After classification by sieving the living spat containing the shells of dead individuals - all having a similar size - enter the device according to the present invention via a feed tube of adapted diameter **(7)** at the top separation vessel **(1).** Said vessel is connected, to a first container **(3)** for collecting the vital population and the second separation vessel **(4)** into which the dead shells are transferred and separated from the air flow. On top of vessel **(4)** a fan/ventilator is mounted to assure the aspiration in the total device. The ventilator is operated for example to remove about 500 to 3.000 l/h. While the low pressure is applied the spat introduced into the device is separated: the lighter shells of dead mussel are sucked into vessel **(4),** while the heavier vital population drops down by gravity into container **(3).** In a preferred embodiment vessel **(4)** is equipped with an additional collecting container **(5)** for the empty shells. The fine adaption to get a maximum of selectivity during the separation is done via the valve **(6)** which allows sucking air by a bypass allowing a very fine control of the process of separation.

### EXAMPLES

### EXAMPLE 1

### Separation of oyster spat of 10-15 mm from empty oyster shells

After sieving a fraction of oyster spat of 10 to 15 mm was injected continuously (10 kg/min) via the feed tube (diameter of 50mm for this oyster-fraction) to the separation vessel 1. The fan was regulated to 500-600l/h at a pressure drop of 25 Pa (measured between vessel 4 and exit fan). The diameter of separation vessel was 160mm - resulting in a linear speed of air of about 0,7cm/s. The diameter of the vessel 4 separating empty shells from air was 600mm - resulting in a linear air speed of 0.06 cm/s, only 10 percent of the speed in vessel 1. The oyster spat was collected in container 3, the empty shells were collected in container 5. Using the valve 6 a fine-tuning allowed a very selective separation, 2-3% of empty shells in container 3 and 1-2% of oysters in container 5 - a total selectivity higher than 95 percent.

### EXAMPLE 2

### Separation of oyster spat of 20-30 mm from empty shells

After sieving a fraction of oyster spat of 20-30 mm was injected continuously (8 kg/h ) via the feed tube (Size 63mm -to avoid blocking) into the separation vessel 1. The fan was regulated to 800l/h. Using the same relations in linear air speed in vessel 1 and 4 with a nearly closed air-valve 6 a similar separation of oysters (selectivity higher than 95 percent) was achieved.

## Claims

1. A process for the preparation of mussel spat, in that the shells of dead young individuals are separated from the living spat by air-separation.

2. The process of Claim 1, wherein the lighter shells are blown from the heavier living mussel spat by compressed air.

3. The process of Claim 1 and/or Claim 2, wherein the lighter shells are sucked from the heavier living mussel spat under slight vacuum of less than 100 P using a fan.

4. The process of any of the preceding claims 1 to 3, wherein the specific flow rate is between 5 to 20m³/h*m² in the separation vessel.

5. The process of any of the preceding claims 1 to 4, wherein the blower for providing pressure air or reduced air moves or removes about 0.1 to about 0.5 m³/h*m² air.

6. The process of any of the preceding claims 1 to 5, wherein the mixture of mussel spat and dead shells is subjected to sieving to obtain fractions where the shells of the living mussel spat and the dead shells have a similar size.

7. The process of Claim 6, wherein said mixture of mussel spat and dead shells is classified into fractions where the shells have an average diameter of 6, 10, 15, 20 and 30 mm.

8. The process of any of the preceding Claims 1 to 7, wherein the mussel spat represents an oyster spat.

9. The process of Claim 8, wherein the mussel spat represents a spat of the oyster *Crassostrea gigas*

10. A device for separating shells of dead young individuals from living mussel spat, encompassing the elements
(a) a vessel **(1)** into which the mixture of mussel spat and dead shells is introduced via a feed tube of an diameter adapted to the size of the spat to avoid blocking
(b) a generator or fan **(2)** for supplying a vacuum;
(c) a first container or vessel **(3)** for taking up the living mussel spat;
(d) a second container or vessel **(4)** for taking up the dead shells,
wherein
(i) said container or vessel **(1)** is connected with the first **(3)** and the second container or vessel **(4),** and
(ii) the generator or fan **(2)** is connected with the first container or vessel **(3),** to avoid blocking of the fan by parts of shells a sieve is installed between separation container or vessel **(4)** and fan **(2)** to provide a slight vacuum of less than 100 P that sucks the lighter dead shells to separation vessel **(4)** falling then by gravity at a very low air-speed into the second container or vessel **(5),** while the heavier living mussel spat is collected in the first container or vessel **(3)** by gravity.
